# EUROPEAN PATENT APPLICATION

(11) **EP 3 118 399 A1**
(43) Date of publication of application: **18.01.2017**
(21) Application number: 16179335.1
(22) Date of filing: 13.07.2016
(51) Int. Cl.: E05B 81/76, G07C 9/00, H04B 13/00, B60R 25/24

(54) **INTELLIGENT SYSTEM FOR THE IDENTIFICATION OF A USER**

(30) Priority: 14.07.2015 IT UB20152167
(71) Applicant: Rapieri, Marco, 26836 Montanaso Lombardo Lodi (IT); Merlo, Matteo Cesare, 20862 Arcore Monza Brianza (IT)
(72) Inventor: Rapieri, Marco, 26836 Montanaso Lombardo Lodi (IT); Merlo, Matteo Cesare, 20862 Arcore Monza Brianza (IT)
(74) Representative: Serravalle, Marco

(57) **Abstract**

The present invention is directed to an intelligent system for the identification of a user, which system comprises at least one base unit and at least one mobile unit; the at least one base unit comprising: a touch point (001), a low frequency transmitter (002), an antenna (004), a radio receiver (005), a decoder (006) and a power supply (007); and wherein the mobile unit comprises: a coupling pad (009), a low frequency receiver (010), a control system (011), an encoder (012) a radio transmitter (013) and an antenna (014).

The invention is further directed to a method for the identification of a user by an intelligent system as previously described, which method comprises: touching the pad (001) by a naked part of the body of a user who is carrying the mobile unit of the system proximal to his own body.

## Description

The present invention is directed to an intelligent system for the identification of a user. Particularly, the invention is directed to an intelligent identification system which can be easily used by a person with a disability or by a user with hands full. The system can be used to open doors, e.g. house, condominium, and office doors, but also to lock/unlock a machinery, to enable forklifts, activate/deactivate alarm systems.

In many areas, RKE (Radio Keyless Entry) remote controls are coupling or possibly even replacing traditional keys for insertion into the lock. Such remote controls, battery powered, send to distance, through an antenna integrated thereof, a radio signal coded according to particular communication protocols. Such signal is then received by one or more receiving base-units.

In a traditional RKE remote control, radio transmission only occurs by making pressure on one of the available buttons of the remote control itself. E.g. in the event that the receiver is coupled to an electric gate-opener, it will be necessary to hand the remote control and press the button to achieve the requested function. Said procedure is indeed less practical in case that the user has hands full or in the event of a user with a disability to whom simple actions, such as hand a remote control and press a precise button can be difficult and slow movements if not, sometimes, impossible to perform.

Recently particular advanced RKEs, independently transmitting their codified radio signals at regular intervals, have also appeared on the market. When they are closer to receiving base-units, the latter activate the function for which it has been designed. Such systems are also suitable for persons with a disability, as it is no more necessary to take out the remote control and press the button but, on the other hand, their radio code can be easily intercepted and cloned. Therefore, being the code cyclically issued, it can be easily intercepted by a radio-scanner; moreover, the battery has less lasting power compared to normal button remote controls. In the end, if used to open a door, it should raise the problem of an unwanted bolt of the lock in the event that the user gets closer to the base-unit without the intention of opening the door.

Magnetic passive card systems (badge) are most spread and known. The system is made of a plastic card ISO format (dimensions 85,6 x 53,98mm thickness 0,8mm) bearing a magnetic band on which personal and identification data can be recorded; the system is then completed by a reader through which swipe or insert the magnetic card. Thanks to this operation, the system will read what is written on the stripe and will operate tasks for which it has been programmed. Due to their simplification, badges are probably the cheapest electronic keys on the market.

Different is instead the decoder reader which, despite being a cheap and user friendly item, is also a device to which pay particular attention during installation. Further, it results to be a less hidden device due to its considerable dimensions and then potentially subject to vandalism. In this system also, similarly to Radio remote system, it is necessary to hand the magnetic card, to swipe it through a passage (or insert into a slot) present on the fixed unit. This procedure requires a particular attention because the insertion side has to be respected as the magnetic stripe, apart from not being on the centre of the badge, is present just on one side. As a consequence, this procedure is not handy for users with a disability, as simple actions like hold a card with two fingers, then insert or swipe it through a slot, can be difficult and slow movements if not, sometimes, impossible to perform. The same action can turn out to be uncomfortable also for people without disabilities should they have hands full of bags, umbrella and/or similar items common in daily life.

Transponder card/tag passive systems are alternative systems to magnetic cards. System is made of a plastic card ISO format (dimensions 85,6 x 53,98 mm thickness 0,8 mm) on which an antenna and a microchip have been integrated on which personal and identification data can be recorded. Tag works in the same way, different from the card only for shape and dimensions which it can have. The system is then completed by a reader to which the transponder needs to get a few centimetres close; an antenna placed behind the panel electromagnetically powers up the transponder, which, by modulating the received magnetic flow can exchange information with the control unit. Thanks to this operation the reader will read what is written on the microchip programmed and inserted into the card, and will operate tasks for which it has been programmed. Due to its particularity and relative affordability, Transponder systems have been long-term used.

In many areas, fingerprints systems (recognition fingerprints systems) are also coupling or possibly even replacing traditional keys to insert into the lock; moreover, are even more used in identification and access-control systems. In Fingerprints case is necessary to install a particular system which also consists of a fingerprint reader, or scanner, bearing an area, of a size little higher of the thumb, where it will be necessary to lean the fingertip.

Once scanned, the fingertip is further compared with all fingertips previously recorded into the device database and, if correctly recognised, the action for which the system has been designed is taken. The system is workable and useful, on the other hand it has a high purchase price and installation cost as it requires intervention of qualified personnel. Besides, most of the time, in case of an integration on an already existent gate-opener, a brickwork is needed, as the system is not compatible with the already present infrastructure, and it is needed to add various "interface" appendix.

An additional severe limitation, that reduced the spread of the item is that the fingertip reader is cumbersome, visible and subject to vandalism. Besides, it is clear that the Fingerprint system is not appropriate for persons with a disability or hands full.

A target of the present invention is to supply an intelligent system for the identification of a user. Particularly, the system can be used to open doors, i.e. house, condominium and office doors but also to lock/unlock a machinery, to enable forklifts, activate/deactivate alarm systems, communicating the received unit-mobile ID to peripheral control systems and/or via bus automation.

A further object is to supply an opening system to one or more doors, the system comprising the intelligent system for the identification of a user and one or more doors which lockers are electrically activated by the intelligent system.

The intelligent system of the present invention includes at least one base-unit and at least one mobile-unit.

The at least one base-unit includes a contact point (001) and a low frequencies transmitter (002). The base-unit also includes an antenna (004), a radio receiver (005) and one decoder (006). The elements (004), (005) e (006) can be placed together within elements (001) and (002) or be separated. That is, it is possible to have a single external unit including the elements (001), (002), (004)-(006), or two different fixed units, one including elements (001), (002), and the other one including elements (004)-(006).

In a preferred embodiment, the base unit including elements (001) and (002), also includes a touch sensor (003).

Each fix unit further includes the power supply (007) and optionally can include some status LED (008) to indicate, for example, the contact point status (001).

The contact point (001) can be the metal doorplate, a panel with various notifications LED, a handle, connected to the base unit through just one cable (2+n cables for n LED version) of a maximum length of 2 m. In general, any conductive element can work as a contact point. Said contact point can have different sizes and shapes. This unit doesn't contain active components (if not optional LED), essentially it is the element on which the touch must be performed with a naked part of the body. The contact point is preferably isolated with a thin insulator protecting film and/or "solder resist".

The low frequency transmitter (002) is an electronic circuit including an alternate signal generator, preferably sinusoidal, preferably at a frequency comprises between 50 kHz and 250 kHz, more preferably between 100 and 150 kHz, even more preferably at 125 kHz circa, and a tension comprised between 5 and 48 Vac RMS, preferably between 8 and 48 Vac RMS, even more preferably between 12 and 48 Vac RMS, by a control circuit managing the signal to be sent to the contact point (001). The upper threshold of 48 V is a legal threshold to avoid damages to people. The signal can be either modulated or not. The modulation can thus vary between 0 and 20 kHz, preferably between 20 Hz and 5 kHz, even more preferably between 200 Hz and 1 kHz, e.g. the modulation can be of about 500 Hz.

The touch sensor (003) is an electronic circuit able to notify to the control system contained into the transmitter (002) when the contact point (001) is touched by a naked part of the body. Practically, for capacity effect, the low frequency signal is able to ground through the human body when the contact point is touched (001); said passage of current also produce an electric field around the body performing the touch. In such situation a faint current is delivered by the transmitter (002); therefore, it is enough to measure said value, through an appropriate electronic circuit, and when it overcomes an adjustable threshold value, it means that a touch has been performed, and it has to be notified to (002).

In this case, the control system shall ensure the functioning of the alternate generator so that it will deliver, for example, 12Vac RMS, limited to a few mA, at a frequency of about 125 kHz, with a duty cycle of 100% on the contact point (001). When a touch is notified from the touch sensor (003) the latter notifies it to the control system which will supply higher tension compared to initial tension, preferably comprised between 10 and 48Vac RMS, limited to a few mA, at a frequency of 125kHz at a modulation frequency comprised between 20 Hz and 20 kHz, preferably between 100 Hz and 5 kHz, even more preferably between 200 Hz and 1 kHz with a duty cycle, for example, of 50%. After 2 seconds, no matter which condition, the control system brings back the applied tension to the contact point (001) to 12 Vac RMS, limited to a few mA, at a frequency of e.g. 125 kHz, with a duty cycle of 100%. Further, in the event that the touch sensor records a touch on the contact point, not followed by user identification, it is possible to activate a particular procedure, e.g. making the doorbell or the intercom ring, or registering the event on a memory connected to the system (e.g. a home PC connected to the system).

If the touch sensor is not present (003), the generator (002) always delivers a tension comprised between 12 and 48 Vac RMS, optionally modulated, said tension directly activating the mobile-unit.

The radio-antenna (004) is necessary to the radio receiver (005) to receive the signal transmitted by the mobile-unit. Said radio-antenna can be integrated inside the product or externally connected via extension cord cable.

The radio receiver (005) is a receiving radio circuit whose harmonized frequency differs from Country to Country; normally frequencies are 315 MHz or 433 MHz circa. The circuit returns the codified digital code, transmitted to the distance from the mobile unit. This code is then delivered to the decoder (006). The signal can also be received from a distance of several meters from the mobile unit (9 m in Touch Key mode and 20 m in Remote Control mode).

The decoder (006) is a circuit managed by a control system able to decode a complex dynamic digital code by the radio receiver (005), like for example Rolling Code, with the purpose of issueing instructions to some Relè-type actuators. Alternatively, or consequently to the actuation, it is possible to transcode the decrypted code to be re-launched on an external communication bus (USB, Ethernet, etc.) which can be connected to PC and/or alike with the purpose of identification in an access-control system and/or alike. The decoder (006) is also able to self-instruct different codes transmitted by an equal number of mobile units simply pushing a button which starts the procedure also known as "Pairing".

The mobile unit includes a coupling surface (009), a low frequency receiver (010), a control system (011), an encoder (012), a radio transmitter (013) and an antenna (014).

The coupling surface (009) is preferably formed by a side of the printed circuit of the board of the mobile unit whose surface is conductive and is used as a capacitive coupling element with the human body. That is, when the low frequency current runs through the body, an electric field is created which coupling in capacitive mode through the coupling surface (009), brings the faint electrical signal generated by the low frequency transmitter (002) to the low frequency receiver (010).

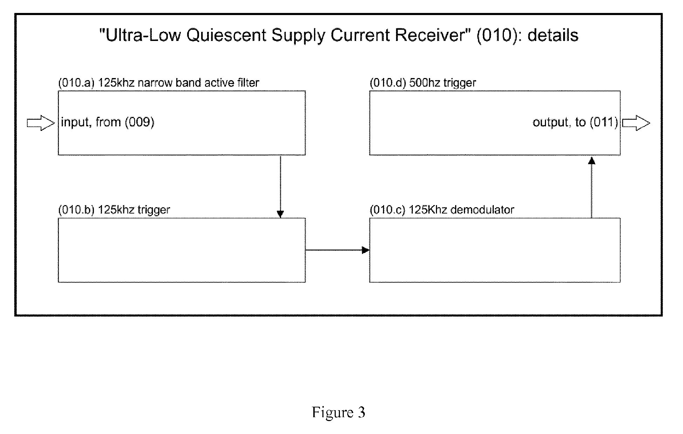

Preferably the low frequency receiver (010) is an "Ultra-Low Quiescent Supply Current 125 kHz Receiver" type at very low consumption (just 7,7µA). Said particular circuit is able to amplify and convert into digital signal the faint tension detected from the coupling surface (009). In other words, it is enough that it (009) detects a signal of just a few mV, with a frequency equal to 125 kHz, to obtain a digital pulse lasting as long as the same detected analogic signal. Said circuit has been designed to play the role of a complete low frequency and low consumption receiver, and it is defined as "Ultra-Low Quiescent Supply Current 125 kHz Receiver" as it requires just 7,7 µA to remain working despite its high sensitivity of 2-3mVpp circa. This peculiarity allows the receiver to be powered by a common lithium battery (e.g. CR2032 type) of just 3 Volt that will be able to maintain it working for several years. The receiver is also not sensitive to frequency of 50 and 60 Hz typical of house and industrial environments. Figure 3 shows in details the functioning of the receiver (10).

Preferably the control system (011) falls into the category "nano Watt Technology", and in its stand-by status (or sleep) consumes just 150 nA. In the event that the coupling surface (009) detects any low frequency signal of enough strength for the receiver (010) to generate an impulse, said impulse switches the control system ready by exiting the stand-by status and restoring it in full activity always consuming low current (15µA). Now, if the impulse has been caused by a touch on the contact point (001) a train of pulses equal to the frequency generated by (002) has to be expected. As the frequency generated by the transmitter (002) in case of touch on the contact point (001) is equal, for example, to 500 Hz, the control system will measure said frequency and if compatible with minimum-maximum programmed frequency threshold it will send the instruction to the encoder (012) of executing a radio transmission of a time lasting for 2 seconds circa. Once carried out the function the control system returns to the non-replicating status (stand-by) the same way it returns if, further to the awaking pulse from stand-by status, there is no following signal for example at 500 Hz.

The encoder (012) is a particular circuit composed by a control system suitably programmed, generating a dynamic digital code like Rolling code by following a particular algorithm which can be recognised exclusively by the decoder (006) of the base unit. Said code is generated under control system instruction (011).

The radio transmitter (013) is a very low power transmitter radio circuit which harmonized power vary from Country to Country, generally frequencies are about 315Mhz or 433Mhz. The circuit transmits to the distance the codified digital code generated by the encoder (012).

The antenna (014) is necessary to the radio transmitter (013) to emit the radio signal. Preferably the antenna falls into category of "Loop Antenna", and it is preferably drawn directly on the printed circuit composing the mobile unit.

Preferably, there are also two buttons and one LED directly integrated on the printed circuit of the mobile unit. The LED, used as transmission indicator, lights up each time the encoder (012) generates a code. The two buttons are used to force the encoder (012) to generate a different code for each pressed button. They are used as transmittal option to the touch on the contact point (001). In this case therefore the system works like a classical RKE.

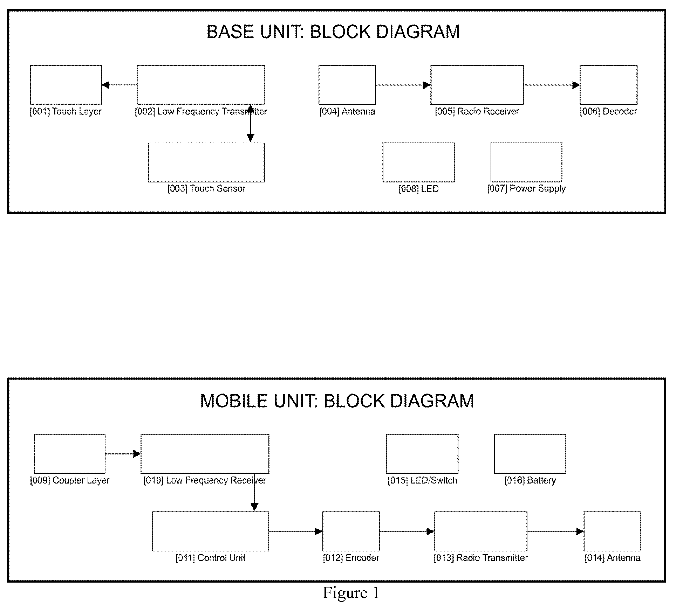

Fig. 1 represents a block diagram for the base unit and the mobile unit.

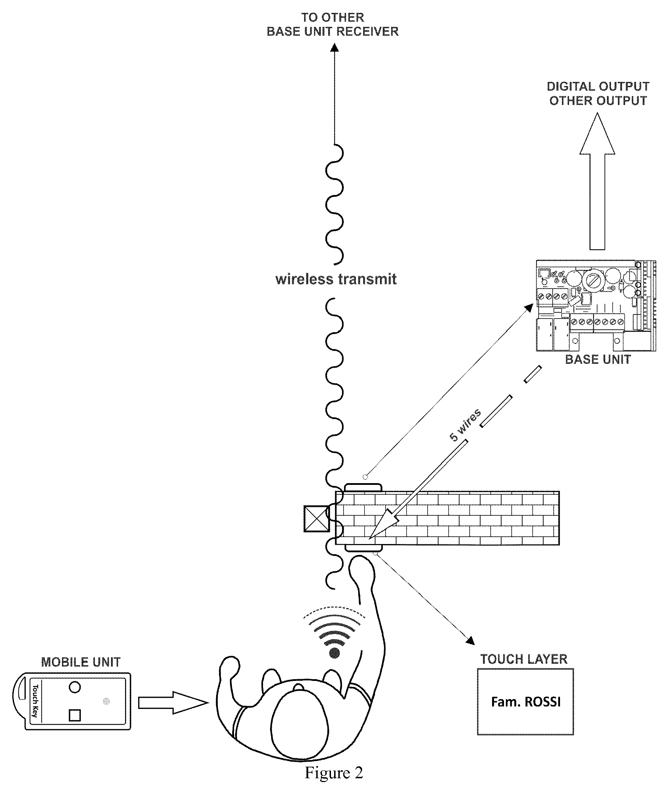

Fig. 2 represents a preferred embodiment of the invention wherein the mobile unit is carried into user's pocket or purse; the user, with a naked part of the body, touches the contact point (001) which, in this embodiment, includes 3 LED. The contact point is connected via 5 wires to the base unit bearing 12Vac RMS at a frequency of 125 kHz; the 125 kHz signal runs through the human body and ground, during this current passing an electric field is generated around the human body. Said electric field, in a capacitive manner, thanks to the coupling surface (009), is received by the receiver (010) which provides to switch the control system ready (011) and awaiting to receive a validation signal corresponding to a frequency e.g. of 500 Hz; meanwhile thanks to the touch detector (003) the fix unit registers an event equal to a just one touch on the contact point (001) and instructs the transmitter (002) to stop the 125Khz frequency signal supply by duty cycle of 100% and starts to generate a 48Vac RMS signal at a frequency of 125Khz modulated for example to 500Hz with duty cycle of e.g. 50%. This will last for 2 seconds circa after what it will be once again applied to the contact point (001); at this point, the mobile unit receives a 125 kHz signal modulated e.g. to 500hz for 2 seconds, so that the control system (011) measures a frequency matching its expectations and instructs through the encoder (012) a radio transmittal through the transmitter (013) and the antenna (014).

The codified wireless radio signal irradiated into the ether is received by one or more base unit including units (004)-(006).

At this point the base unit will be able to excite one or more relays (e.g. to excite an electric-strike lock) or will be able to communicate the id of the received mobile unit to peripherals control systems and/or automation via bus (e.g. Ethernet, RS485, USB, etc.) for identification or access-control systems.

## Claims

1. Intelligent system for the identification of a user, which system comprises at least one base unit and at least one mobile unit; the at least one base unit comprising:
a. a touch point (001);
b. a low frequency transmitter (002),
c. an antenna (004);
d. a radio receiver (005);
e. a decoder (006); and
f. a power supply (007);
and wherein the mobile unit comprises:
g. a coupling pad (009);
h. a low frequency receiver (010);
i. a control system (011);
j. an encoder (012);
k. a radio transmitter (013); and
l. an antenna (014).

2. System according to claim 1 wherein the base unit also comprises:
m. a touch sensor (003).

3. System according to claim 1 or 2 wherein the touch point (001) is connected to the transmitter (002) through a single electrical wire.

4. System according to claim 1 or 2 wherein the base unit further comprises:
n. one or more LED (007) showing the state of the at least one base unit, and wherein the touch point is connected to the transmitter through an even number of wires equal to 2+n being n the number of LED.

5. System according to claim 1-3 wherein the low frequency transmitter (002) comprises an alternate signal generator, preferably sinusoidal, at a frequency of between 50 kHz and 250kHz, preferably between 100 e 150 kHz, more preferably approximately 125 kHz, and a control system operating the signal to be sent to the touch point (001).

6. System according to claim 1-4, comprising at least two base units, one comprising at least components (001), (002), (007) and preferably component (003), and one comprising at least components (004)-(007).

7. System for opening of one or more doors comprising the intelligent system of claims 1-6 and one or more doors whose locks are implemented by the intelligent system of identification of a user.

8. Method for the identification of a user by an intelligent system according to claims 1-6, which method comprises: touching the pad (001) by a naked part of the body of a user who is carrying the mobile unit of the system proximal to his own body.

9. Method for opening one or more doors by a system according to claim 7, which method comprises: touching the pad (001) by a naked part of the body of a user who is carrying the mobile unit of the system proximal to his own body.

10. Method according to the claims 8 or 9, wherein the system in the presence of a touch of the contact point (001) by a non-authorized user, i.e. a user who does not carry a proper mobile unit, actuates an alert procedure, which consists of making the bell-door ring, or sending an alert message to a memory connected to the system.
